Europäisches Patentamt

European Patent Office

Office européen des brevets

(19)

(11) Publication number: **0 067 365**
**A1**

(12) # EUROPEAN PATENT APPLICATION

(21) Application number: **82104837.8**

(22) Date of filing: **02.06.82**

(51) Int. Cl.³: **G 09 G 3/36**
**H 04 N 3/12**

(30) Priority: **03.06.81 JP 84366/81**

(43) Date of publication of application:
**22.12.82 Bulletin 82/51**

(84) Designated Contracting States:
**CH DE FR GB IT LI NL SE**

(71) Applicant: **Hitachi, Ltd.**
**5-1, Marunouchi 1-chome**
**Chiyoda-ku Tokyo 100(JP)**

(72) Inventor: **Hanmura, Hisao**
**2200, Kamino**
**Kumagaya-shi(JP)**

(72) Inventor: **Takasaka, Masahiro**
**600-43, Kotobukicho**
**Hitachiota-shi(JP)**

(74) Representative: **Ebbinghaus, Dieter et al,**
**v. FÜNER, EBBINGHAUS, FINCK Patentanwälte**
**European Patent Attorneys Mariahilfplatz 2 & 3**
**D-8000 München 90(DE)**

(54) **Matrix display device.**

(57) A matrix display device comprises a plurality of column electrodes ($Y_{A1}$ - $Y_{AJ}$, $Y_{B1}$ - $Y_{BJ}$), a plurality of row electrodes ($X_1$ - $X_I$), a column electrode driver (10, 30), a row electrode driver (6) and a video data circuit (100). The column electrodes for each column of picture cells of a matrix display panel (7) are electrically divided into a plurality of groups in a predetermined regularity, and terminals of the column electrodes of at least two groups are arranged on the same side of the matrix display panel. The column electrodes of the at least two groups arranged on the same side are connected to the column electrode driver. The column electrode driver renders, by a control signal from the video data circuit, a sequence of arrangement of the video data to coincide with the sequence of arrangement of the terminals of the column electrodes of the at least two groups arranged on the same side of the matrix display panel.

FIG. 6

EP 0 067 365 A1

# MATRIX DISPLAY DEVICE

The present invention relates to a matrix display device using a multiplex matrix display panel.

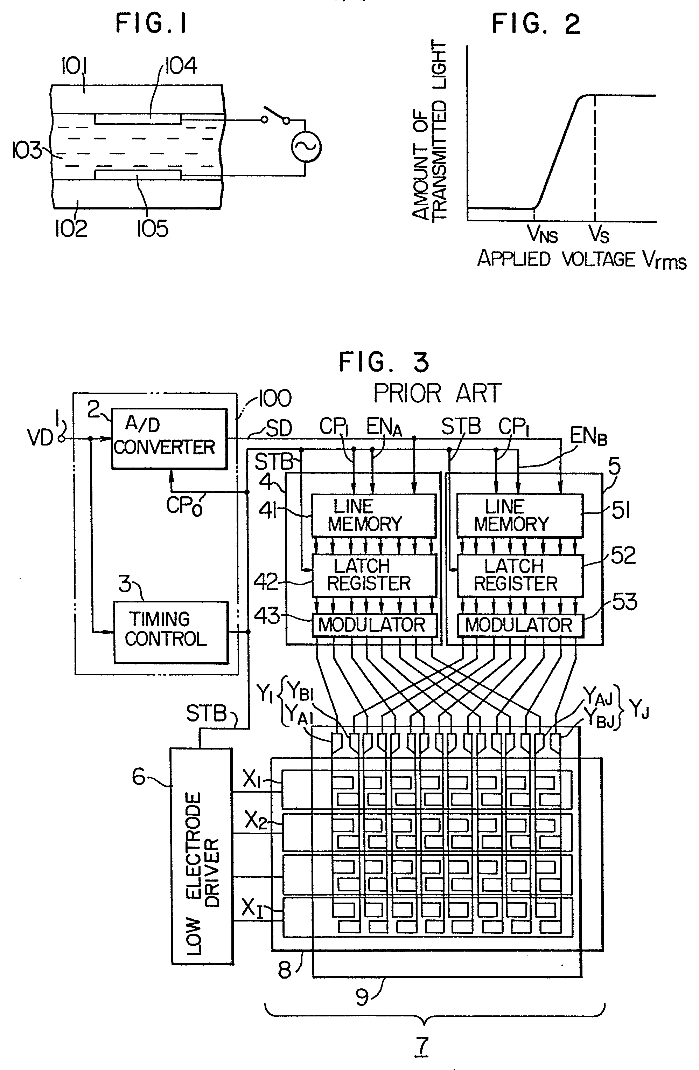

Various sorts of display cells for the matrix display device such as liquid crystal cells, electrochromic cells, a plasma display, a fluorescent display tube, LED's, PLZT cells and electroluminescence cells have been known. By way of example, a principle of a liquid crystal display device is illustrated in Fig. 1, in which liquid crystal 103 is held between a pair of substrates 101 and 102 at least one of which is transparent, and a predetermined voltage is applied between transparent electrodes 104 and 105 formed on the opposing surfaces of the substrates 101 and 102 to cause an electrooptical change in liquid crystal molecules. A relation between an effective voltage applied across the transparent electrodes 104 and 105 and an amount of transmitted light is shown in Fig. 2, in which $V_S$ and $V_{NS}$ represent threshold voltages. In the liquid crystal matrix display device, picture cells defined at the crosspoints of the transparent electrodes 104 and 105 are generally arranged in matrix and characters or graphic patterns are displayed by selecting the effective voltages applied to the respective picture cells.

In such a matrix display device, in order to fire a number of picture cells with a high contrast, a multiplex matrix system or an alternate multiplex matrix system has been proposed. By way of example, a multimatrix or duplex matrix system display device is explained with reference to Figs. 3 to 5. Configurations shown in Figs. 3 and 5 are disclosed in Japanese Patent Application Laid-Open Nos. 120230/78 and 106189/79 and U.S. Patent 4,233,602, respectively.

Referring to Fig. 3, numeral 100 denotes an image data circuit which comprises a video signal input terminal 1, an A-D converter 2 and a timing control circuit 3. Column electrode drive circuits 4 and 5 comprise line memories 41 and 51, latch registers 42 and 52 and modulators 43 and 53, respectively. Numeral 6 denotes a row electrode drive circuit. A matrix display panel 7 has an electrooptical effect material such as a liquid crystal or an electroluminescence material filled between a pair of substrates 8 and 9. The first substrate 8 has I row electrodes $X_1 - X_I$ and the second substrate 9 has J A-column electrodes $Y_{A1} - Y_{AJ}$ and J B-column electrodes $Y_{B1} - Y_{BJ}$. The column electrodes are electrically divided into two groups which form J display columns $Y_1 - Y_J$. Accordingly, 2I rows by J columns of picture cells are defined at the crosspoints of the row electrodes and the column electrodes with the i-th row electrode $X_i$ (i = 1, 2, ... I) being connected to the (2i-1) the row picture cell and the (2i)th row picture cell. The A-column electrode $Y_{Aj}$ of the i-th column $Y_j$ (j = 1, 2, ... J) is connected to the picture cells on the odd-numbered rows ((2i-1)th row) and the B-column electrode $Y_{Bj}$ is connected to the picture cells on the even-numbered rows ((2i)th row).

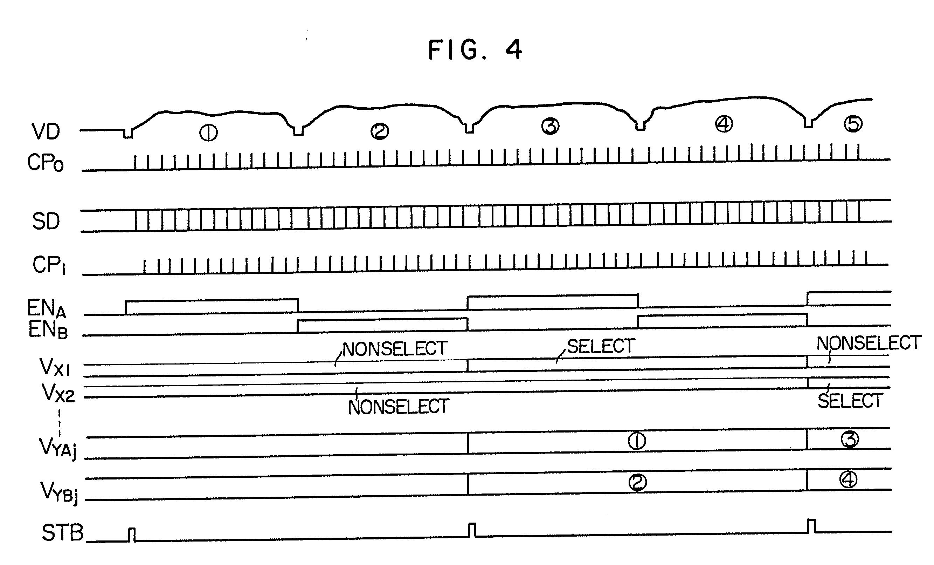

Referring to Fig. 4, circled numerals under a video signal VD indicate row numbers of a scan line of the video signal.

The video signal VD as shown in Fig. 4 is applied to the video signal input terminal 1. The A-D converter 2 receives the video signal VD and a sampling clock $CP_0$ and converts the video signal VD to a digital signal SD in synchronism with the sampling clock $CP_1$. The timing control circuit 3 extracts a synchronizing signal from the video signal VD to generate the sampling clock $CP_0$, write clocks $CP_1$ and enable signals $EN_A$, $EN_B$ and a strobe pulse STB for controlling the display device. The enable signal $EN_A$ is generated in every odd-numbered row period of the scan line and the enable signal $EN_B$ is generated in every even-numbered row period of the scan line.

The line memory 41 receives the digital video signal SD, the write clock $CP_1$ and the enable signal $EN_A$ generated in the odd-numbered row period of the scan line and sequentially stores one scan line of video data in synchronism with the write clock $CP_1$ while the enable signal is present. The line memory 51 receives the digital video signal SD, the write

clock $CP_1$ and the enable signal $EN_B$ generated in the even-numbered row period of the scan line and stores one scan line of video data in synchronism with the write clock $CP_1$ while the enable signal $EN_B$ is present. Accordingly, the video data of the odd-numbered row of the scan line is written into the line memory 41 and the video data of the even-numbered row of the scan line is written into the line memory 51. As shown in Fig. 4, at the first portion of one field of image, the video data of the first row of the scan line is written into the line memory 41 and the video data of the second row of the scan line is written into the line memory 51.

The strobe pulse STB is generated when the even rows of the scan line of video data have been written into the line memory 51. The latch registers 42 and 52 receive the video data stored in the line memories 41 and 51, respectively, and the strobe pulse STB and parallelly latch the video data from the line memories 41 and 51, respectively, in synchronism with STB.

The modulator 43 receives the odd rows of the scan line of video data latched in the latch register 42 and supplies column electrode drive signals $V_{YAj}$ (j = 1, 2, ... J) to the column electrodes $Y_{Aj}$ for modulating the brightnesses of the picture cells. Similarly, the modulator 53 receives the even rows of the scan line of video data latched in the latch register 52 and supplies column electrode drive signal $V_{YBj}$ to the column electrodes $Y_{Bj}$.

The row electrode drive circuit 6 receives the strobe pulse STB and supplies row electrode drive signals $V_{Xi}$ (i = 1, 2, ... I) to the row electrodes $X_i$. The row electrode drive signals $V_{Xi}$ are generated in such a manner that only one of the row electrodes $X_i$ is selected and other row electrodes are not selected at a time and the row electrodes $X_i$ are sequentially selected one at a time in synchronism with the strobe pulse STB.

Specific waveforms of the row electrode drive signal $V_{Xi}$ and the column electrode drive signals $V_{YAj}$ and $V_{YBj}$ vary depending on particular electrooptical material used as the display medium.

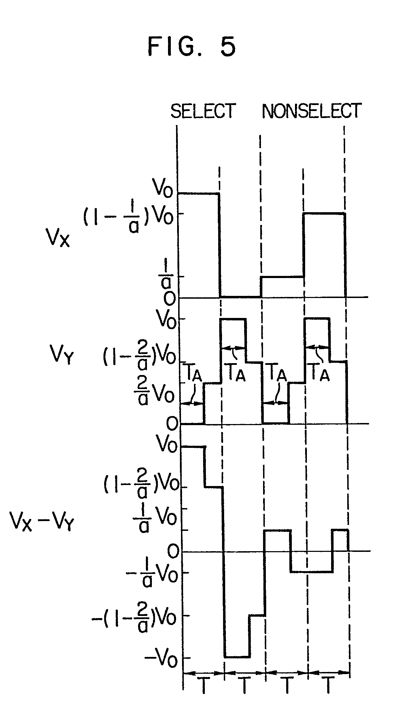

The row electrode drive signal $V_X$ and the column electrode drive signal $V_Y$ for the liquid crystal display medium are shown in Fig. 5. A constant $\underline{a}$ is selected to be equal to or close to $\sqrt{I} + 1$ where $I$ is the number of the row electrodes $X_i$, and $V_O$ is a maximum amplitude of a voltage $V_X - V_y$ applied to the picture cell. The voltage $V_O$ is selected to meet the following relation:

$$a\sqrt{\frac{I}{I + (a^2 - 1)}}\, V_{TH} < V_O < a\sqrt{\frac{I}{I + \{(a - 2)^2 - 1\}}}\, V_{TH}$$

where $V_{TH}$ is a threshold voltage of the liquid crystal.

Each of the scan electrodes $X_i$ is a selected in every I-th cycle. The brightness of the picture cell is determined by a ratio $T_A/T$ of the column electrode drive signal $V_Y$. When $T_A = T$, the brightness of the picture cell is maximum, and when $T_A = 0$ it is minimum. Accordingly, by controlling the ratio $T_A/T$, tone of the displayed image can be controlled.

Referring to Fig. 4, the video data written into the line memories 41 and 51 at the first and second rows of the scan line of video signal VD, respectively, are transferred to the latch registers 42 and 52 in response to the strobe pulse STB generated at the end of the second row of the scan line and modulated into the column electrode drive signals $V_{YAj}$ and $V_{YBj}$ by the modulator 43 and 53 so that the first and second rows of the video data are supplied to the column electrodes $Y_{Aj}$ and $Y_{Bj}$. During this period, the third and fourth rows of the scan line of video signal VD are written into the line memories 41 and 51 as the next video data. The row electrode drive circuit 6, at this time, generates the raw electrode drive signal $V_{Xi}$ to select the first row electrode $X_1$ so that the first and second rows of the picture cells on the column $Y_1$ are fired.

At the end of the fourth column of the scan line of video signal VD, the strobe pulse STB is again generated and the column electrode drive signals $V_{YAj}$ and $V_{YBj}$ drive the third and fourth rows of the video signal VD and the row electrode drive signal $V_{Xi}$ selects the second row electrode $X_2$ so that the third and fourth rows of the picture cells on the column $Y_i$ are fired. Similar operations are repeated to fire other picture cells.

As shown in Fig. 5, where the terminals of the different column electrodes $Y_{Aj}$ and $Y_{Bj}$ are arranged on the same side of the matrix display panel 7, the signal lines of the column electrodes $Y_{Aj}$ and $Y_{Bj}$ and the column electrode drive circuits 4 and 5 cross to each other. Accordingly, they cannot be wired by a flat cable but a multi-layer printed circuit board is required, which results in the increase of the manufacturing cost.

It is an object of the present invention to provide a matrix display device in which connecting lines for column electrodes and column electrode driver do not intersect to facilitate connecting work.

In order to achieve the above object, according to a feature of the matrix display device of the present invention, column electrodes of each column of a matrix picture cells of a matrix display panel are electrically divided into a plurality of groups with a predetermined regularity for each column and terminals of the column electrodes of at least two groups of the plurality of groups of column electrodes are arranged on the same side and the column electrodes of at least two groups arranged on the same side are connected to the column electrode driver, and in the column electrode driver a sequence of arrangement of the video data is rendered by a control signal which is an output signal from a video data circuit to coincide with a sequence of arrangement of the terminals of the column electrodes of at least two groups arranged on the same side of the matrix display panel.

The predetermined regularity for electrically dividing the column electrodes into the plurality of groups means that the column electrodes are divided by a number of groups equal to four times as large as the number of row electrodes to define four-line picture cells for each row electrode, and the column electrodes are divided into groups $a$, $b$, $c$ and $d$ in a regularly repeating sequence such as a multiplex system in which the groups $a$, $b$, $c$, $d$, $a$, $b$, $c$, $d$, ... are arranged in the order of line, a reverse multiplex system in which groups $a$, $b$, $c$, $d$, $d$, $c$, $b$, $a$, $a$, $b$, $c$, $d$, ... are arranged or a division system in which groups $a$, $a$, ... $a$, $b$, $b$, ... $b$, $c$, $c$, ... $c$, $d$, $d$, ... $d$ are arranged.

In the column electrode driver, the sequence of arrangement of the video data is rendered by the control signal which is the output signal of the video data circuit to coincide with the sequence of arrangement of the terminals of the column electrodes of at least two groups arranged on the same side of the matrix display panel in the following manner. The column electrodes are divided into groups by a quadruplex system and all of the terminals of the column electrodes are arranged on the same side of the matrix display panel in the order of $\underline{a}$, $\underline{b}$, $\underline{c}$, $\underline{d}$ (for the first column), $\underline{a}$, $\underline{b}$, $\underline{c}$, $\underline{d}$ (for the second column), ..., and the video data to be written into the random access memory of the column electrode driver are arranged in the order of Ia, Ib, Ic, Id (for the first column), Ia, Ib, Ic, Id (for the second column), ....

The other objects and the features of the present invention will be apparent from the following description of the preferred embodiments.

In the drawings,

Fig. 1 shows a schematic diagram for explaining a principle of a liquid crystal display,

Fig. 2 shows a relationship between an applied voltage and amount of light transmission for a liquid crystal display device,

Fig. 3 shows a schematic diagram of a prior art liquid crystal matrix display device,

Fig. 4 shows a timing chart for explaining the operation of the display device of Fig. 3,

Fig. 5 shows a drive signal for the display device of Fig. 3,

Fig. 6 shows a schematic diagram of a first embodiment of a liquid crystal matrix display device in accordance with the present invention,

Fig. 7 shows a schematic diagram of an embodiment of a column electrode driver in the first embodiment of Fig. 6,

Fig. 8 shows a timing chart for explaining the operation of the first embodiment of Fig. 6,

Fig. 9 shows a schematic diagram of a second embodiment of the liquid crystal matrix display device in accordance with the present invention,

Fig. 10 shows a timing chart for explaining the operation of the second embodiment of Fig. 9,

Fig. 11 shows a schematic diagram of a third embodiment of the liquid crystal matrix display device in accordance with the present invention,

Fig. 12 shows a timing chart for explaining the operation of the third embodiment of Fig. 11,

Fig. 13 shows a schematic diagram of a fourth embodiment of the liquid crystal matrix display device in accordance with the present invention,

Fig. 14 shows a schematic diagram of one embodiment of a column electrode driver of the fourth embodiment of Fig. 13, and

Fig. 15 shows a timing chart for explaining the operation of the fourth embodiment of Fig. 13.

The present invention will now be explained in detail with reference to the preferred embodiments.

Embodiment 1

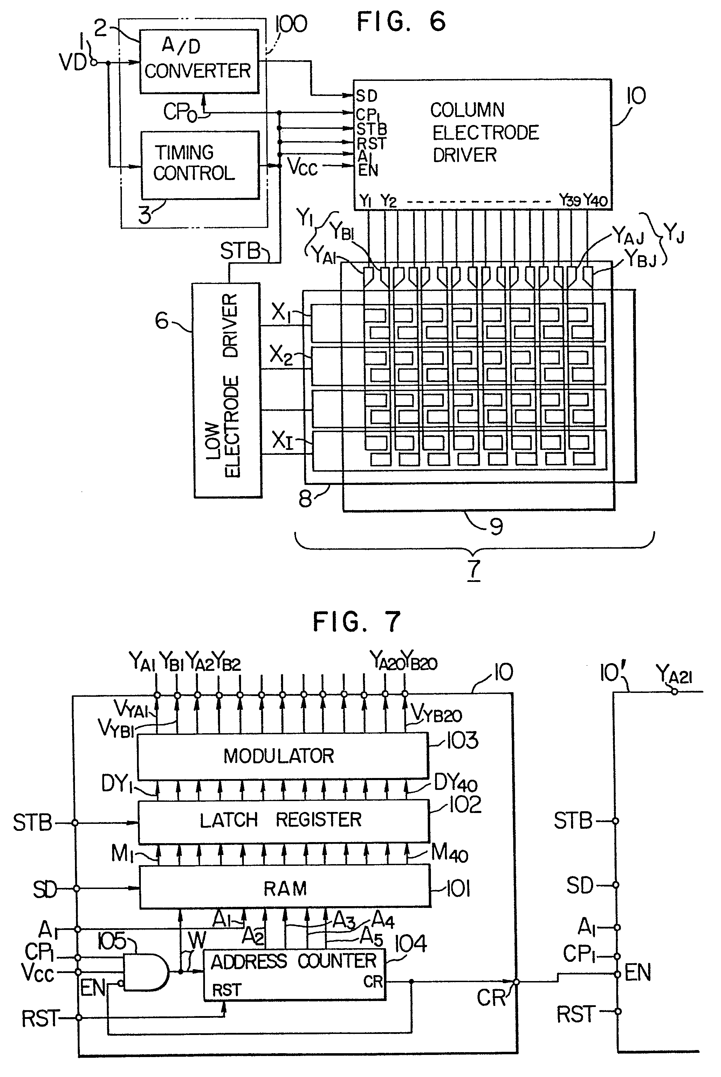

Referring to Fig. 6, a video data circuit 100 comprises an A/D converter 2 and a timing control circuit 3. The video data circuit 100 may include a memory for storing at least one scan line of video data. The timing control circuit 3 generates a sampling clock $CP_0$, a write clock $CP_1$ and a strobe pulse STB as well as a reset signal RST and an address signal $A_1$, which are supplied to other sections.

As shown in Fig. 7, a column electrode driver 10 is an integrated circuit comprising a random access mamory (RAM) 101, a latch register 102, a modulator 103, an address counter 104 and a gate 105. It has 2J output ports so that it can drive both A-column electrodes $Y_{Aj}$ and B-column electrodes $Y_{Bj}$. In the illustrated example, it has 40 output terminals. When the column electrode driver is large, an additional column electrode drive integrated circuit 10' as shown in Fig. 4 may be provided or the number of outputs may be increased.

In Fig. 6, the like numerals and symbols to those shown in Fig. 3 denote the like or equivalent elements.

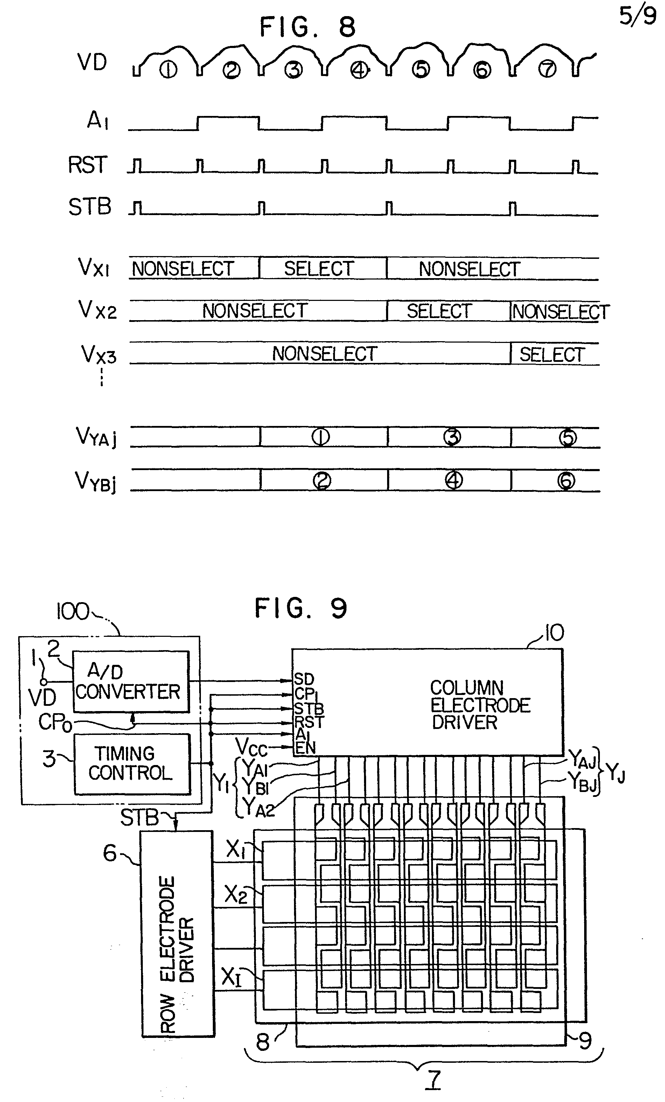

Fig. 8 shows a timing chart for the circuits of Figs. 6 and 7.

The gate 105 gates out the write clock $CP_1$ as a write clock W to the RAM 101 and the address counter 104 when the enable signal EN is "1" and the carry signal CR of the address counter 104 is "0".

The address counter 104 receives the write clock W and the reset signal RST and supplies the carry signal CR and the address signals $A_2$ - $A_5$ to the RAM 101. The address counter 104 is reset by the reset signal RST which is generated at the same time as the horizontal synchronizing signal so that the address signals $A_2$ - $A_5$ and the carry signal are reset to "0". Under this condition, the gate 105 gates out the write clock $CP_1$ as the write clock W. Thus, the address counter 104 counts up the write clock W to increment the content thereof one at a time until the carry signal CR is changed to "1", and produces the address signals $A_2$ - $A_5$ in binary number.

The RAM 101 receives the output signal $A_1$ of the timing control circuit 3 and the output signals $A_2$ - $A_5$ of the address counter 104 as the address signal and the digital video signal SD as the data, and writes the video signal SD into the memory cells specified by the address ($A_5$, $A_4$, $A_3$, $A_2$, $A_1$) in synchronism with the write clock W.

Of the input signals to the column electrode driver, the digital video signal SD, the strobe pulse STB and the write clock $CP_1$ are identical to those of the prior art circuit shown in Fig. 4. A voltage $V_{cc}$ corresponding to logical "1" is always applied to the enable signal terminal EN. In the additional column electrode driver 10' shown in Fig. 7, the carry signal CR from the preceding column electrode driver 10 is applied to the enable signal terminal EN. The reset signal RST is generated at the same time as the horizontal synchronizing signal of the video signal VD, and the address signal $A_1$ is generated at the second row of the scan line and alternately assumes logical "1" and "0" for each subsequent row of the scan line.

In the first row period of the scan line, the address signal $A_1$ from the timing control circuit 3 is "0" and the address signals $A_2 - A_5$ from the address counter 104 are incremented by one at a time in synchronism with the clock pulse $CP_1$ so that the address $(A_5, A_4, A_3, A_2, A_1)$ changes in a manner of (00000), (00010), (00100), (00110), ... in synchronism with the clock pulse $CP_1$ and the digital video data of the first row of the scan line is sequentially written into the specified addresses of the RAM 101. The above addresses in binary number represent 0, 2, 4, 6, ... and the written data are outputted from the outputs $M_1$, $M_3$, $M_5$, ... of the RAM 101.

The address counter 104 in the present embodiment is a scale-of-20 counter which counts up to 20 in synchronism with the clock pulse $CP_1$ and produces the carry signal CR when it has written the twentieth data into the RAM 101. Thereafter, the gate 105 ceases to gate out the write clock W and hence the data is no longer written into the RAM 101. The carry signal CR is applied to the enable signal terminal EN of the additional column electrode driver 10' so that the twenty-first and subsequent video data are written into the RAM of the column electrode driver 10'.

In the second row period of the scan line, the address signal $A_1$ from the timing control circuit 3 is "1" and the address $(A_5, A_4, A_3, A_2, A_1)$ changes in a manner of (00001), (00011), (00101), (00111), ... in synchronism with the clock pulse $CP_1$ so that the digital image signal SD of the second row of the scan line is sequentially written into the specified addresses of the RAM 101. The above addresses in the binary number represent 1, 3, 5, 7, ... and the written data are outputted from the outputs $M_2$, $M_4$, $M_6$, ... of the RAM 101.

Accordingly, the video data of the first row of the scan line and the video data of the second row of the scan line are alternately arranged with the video data of the first row of the scan line being arranged first. This sequence of arrangement corresponds to the sequence of connection of the column electrodes of the matrix display panel 7 with the column electrode driver 10 in which the column electrodes are arranged in $Y_{A1}$, $Y_{B1}$, ... with the A-column electrode being arranged first.

In the RAM 101, all of the memory cell contents are always outputted $(M_1, M_2, ... M_{40})$ to the latch register 102, which latches the signals $M_1 - M_{40}$ in synchronism with the strobe pulse STB generated at the end of every even-numbered row the scan line and supplies output signals $DY_1 - DY_{40}$ to the modulator 103, which in turn converts the received signals $DY_1 - DY_{40}$

to column electrode drive signals $V_{YAj}$, $V_{YBj}$ ($j = 1, ...$ 20). In the third and fourth row periods of the scan line, the row electrode $X_1$ is selected and the column electrode drive signals $V_{YAj}$ and $V_{YBj}$ corresponding to the first and second rows of the scan line are applied to the column electrodes $Y_{Aj}$ and $Y_{Bj}$. The column electrode drive signals $Y_{Aj}$ and $Y_{Bj}$ corresponding to the video data of the first and second rows of the scan line are applied to the A-column electrodes $Y_{Aj}$ and the B-column electrodes $Y_{Bj}$, respectively.

The display operations of the video data in the third and subsequent row periods of the scan line are repetition of the display operations in the first and second row periods of the scan line.

With the above construction, the video data of the odd-numbered rows and the even-numbered rows of the scan line are alternately written into the RAM 101 as described above. Accoridngly, the drive signals $V_{YAj}$ corresponding to the odd-numbered rows of the scan lines are applied to the columns $Y_{Aj}$ of the A-column electrodes and the drive signals $V_{YBj}$ corresponding to the even-numbered rows of the scan line are applied to the columns $Y_{Bj}$ of the B-column electrodes. Therefore, to connecting wires for the column electrodes $Y_{Aj}$ and $Y_{Bj}$ and the column electrode driver 10 do not intersect and the display device can be easily constructed inexpensively.

Since the RAM 101, the latch register 102, the modulator 103, the address counter 104 and the gate 105 are integrated in one LSI chip the overall device size is compact.

Since the sequence of arrangement of the video data can be rearranged in the LSI by the RAM and the address counter contained therein, no special circuit for rearranging the sequence of the video data is necessary and power consumption is saved. Accordingly, the display device is easy to construct and inexpensive.

In the above embodiment, the column electrodes connected to the picture cells of the odd-numbered rows on the display column and the column electrodes connected to the picture cells of the even-numbered row on the display column are alternately arranged and hence the video data of the odd-numbered rows of the scan line and the video data of the even-numbered rows of the scan line are alternately written into the RAM.

Embodiment 2

Fig. 9 shows a second embodiment of the present invention which illustrates a reverse duplex matrix display panel.

In Fig. 9, the number of picture cells is 21 rows X J columns as is the case of Figs. 3 and 6, and the substrate 8 and the row electrodes formed thereon are conventional ones. The number of row electrodes is T with each row being designated by $X_1$, $X_2$, ... $X_I$. Each row electrode $X_i$ is connected to both the (2i-1)th row picture cells and the 2i-th row picture cells as is the case of Figs. 3 and 6.

J A-column electrodes and J B-column electrodes are formed on the other substrate 9 and they are designated by $Y_{A1}$, $Y_{A2}$, ... $Y_{AJ}$ and $Y_{B1}$, $Y_{B2}$, ... $Y_{BJ}$, as is the case of Figs. 3 and 6.

The manner in which the column electrodes are connected to the picture cells is different from those of Figs. 3 and 6. The A-column electrode $Y_{Aj}$ is connected to the odd-numbered row picture cell on the display column $Y_j$ where the A-column electrode $Y_{Aj}$ faces to the odd-numbered row electrode $X_{2m-1}$ (m = 1, 2, ... I/2), and connected to the even-numbered row picture cell on the display column $Y_j$ where it faces to the even-numbered row electrode $X_{2m}$ (m = 1, 2, ... I/2). For example, the A-column electrode $Y_{A1}$ is connected to the picture cell on the first row where it faces to the row electrode $X_1$ and connected to the fourth row picture cell where it faces to the row electrode $X_2$.

The B-column electrode $Y_{Bj}$ is connected to the even-numbered row picture cell on the display column $Y_j$ where the B-column electrode $Y_{Bj}$ faces to the odd-numbered row electrode $X_{2m-1}$ (m = 1, 2, ... I/2), and connected to the odd-numbered row picture cell on the display column $Y_j$ where it faces to the even-numbered row electrode $X_{2m}$ (m = 1, 2, ... I/2). For example, the B-column electrode $Y_{Bi}$ is connected to the second row picture cell where it faces to the row electrode

$X_1$ and connected to the third row picture cell where it faces to the row electrode $X_2$.

Both the A-column electrode $Y_{Aj}$ and the B-column electrode $Y_{Bj}$ are connected to the odd-numbered row picture cells on the display column $Y_j$ at some points and connected to the even-numbered row picture cells on the display column $Y_j$ at other points. The present embodiment is applicable to such a case. No modification of the device is necessary for the purpose and the construction of the present invention is identical to those of Figs. 6 and 7 except that the matrix display panel is changed to that shown in Fig. 9.

The difference between the present embodiment and the embodiment 1 is the address signal $A_1$ from the timing control circuit 3.

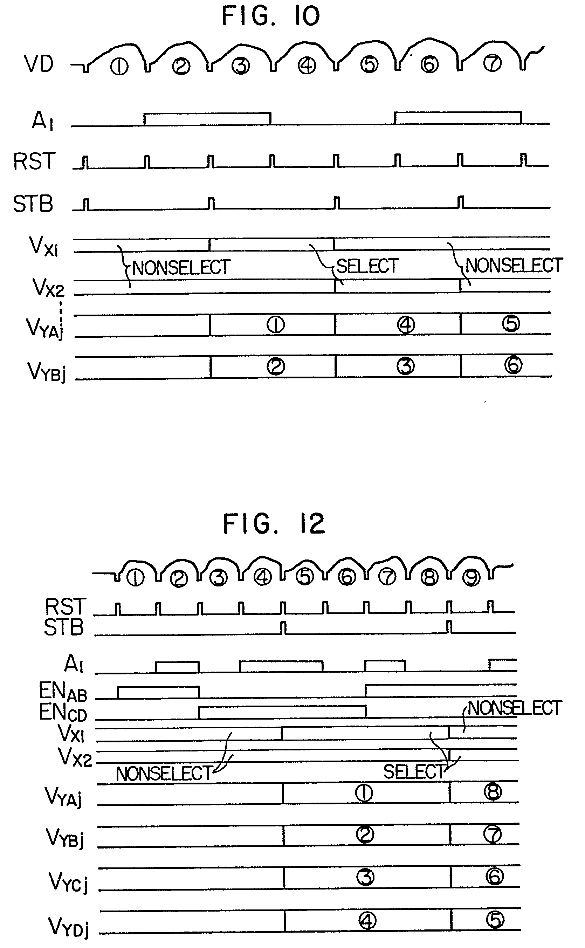

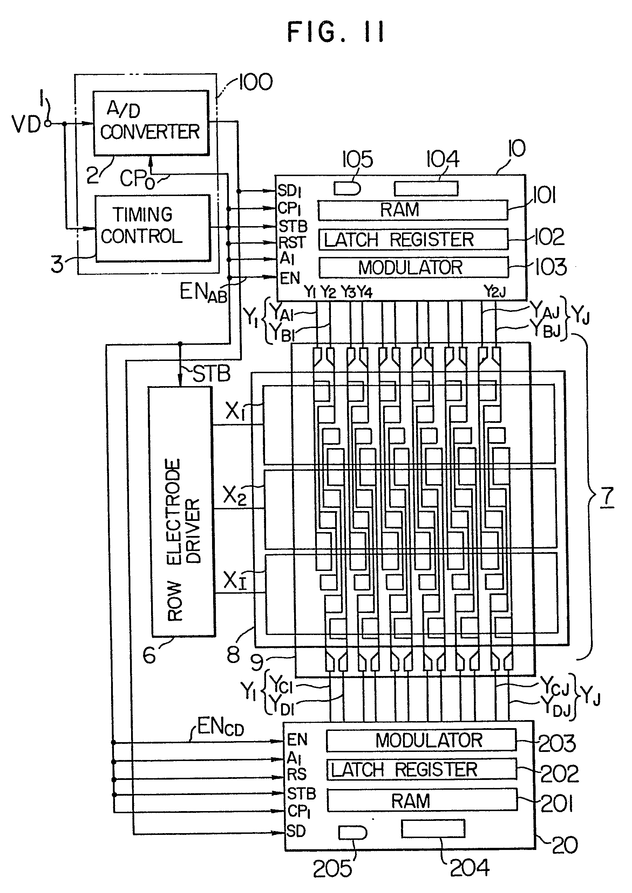

The operation waveforms of the second embodiment shown in Fig. 9 are shown in Fig. 10.

In Fig. 10, the timing signal $A_1$ from the timing control circuit 3 is generated in the second row period of the scan line and alternately repeats logical "1" and "0" for every second row period of the scan line.

The display operation of the video data of the first and second row periods of the scan line is identical to the first embodiment shown in Figs. 6 to 8.

In the third row period of the scan line, the address signal $A_1$ from the timing control circuit 3 is "1", and in the fourth row period of the scan line the address signal $A_1$ is "0". Since the picture cells on the third row correspond to the B-column electrodes $Y_{Bj}$ and the picture cells on the fourth row correspond to the A-column electrodes $Y_{Aj}$, the video data for the third and fourth rows of the scan line are alternately arranged in the RAM 101 with the video data for the fourth row of the scan line being first. Those video data are converted to the column electrode drive signals $V_{YAj}$ and $V_{YBj}$ during the fifth and sixth row periods of the scan line and the signals are applied to the column electrodes $Y_{Aj}$ and $Y_{Bj}$. At this time, the second row electrode $X_2$ is selected, and the column electrode drive signals $V_{YAj}$ and $V_{YBj}$ corresponding to the video data of the fourth and third rows of the scan line, respectively, to the A-column electrodes $Y_{Aj}$ and the B-column electrodes $Y_{Bj}$, respectively.

The display operations in the fifth row period and the subsequent periods of the scan line are the repetition of the display operations in the first to fourth row periods.

Accordingly, in the matrix display panel shown in Fig. 9, when the i-th row electrode $X_i$ is selected, to state of the (2i-1)th row of the scan line is displayed by the picture cells at the (2i-1)th row on the display column $Y_j$ and the state of the 2i-th row of the scan line is displayed by the picture cells at the 2i-th row on the display column $Y_j$.

The feature of the present embodiment resides in that the sequence of the writing of the video data to the RAM 101 is changed for each scan line in accordance with the facing relation of the row electrode and the column electrode.

In accordance with the second embodiment, in addition to the advantages attained by the first embodiment, the size of the column electrode facing to the picture cell is doubled and the number of the column electrodes is reduced to one half. Accordingly, the manufacture of the electrodes is facilitated.

In addition, even if a slight misalignment is included between the substrates 8 and 9, only the sizes of the picture cells fired are increased or decreased and no undesired picture cells are fired as is done in the prior art device in the case of the misalignment. Accordingly, the alignment in the assembling operation is facilitated and the working efficiency is improved.

Embodiment 3

Figs. 11 and 12 show a third embodiment of the present invention embodied in a reverse quadruplex matrix system display device. In Figs. 11 and 12, the like numerals to those shown in Figs. 3, 6 and 9 denote the like or equivalent elements.

In the reverse quadruplex matrix system, the picture cells of four rows face to each row electrode

$X_i$ (i = 1, 2, ... I).  The column electrodes on one display column $Y_j$ (j = 1, 2, ... J) are divided into four groups, A-column electrodes $Y_{Aj}$, B-column electrodes $Y_{Bj}$, C-column electrodes $Y_{Cj}$ and D-column electrodes $Y_{Dj}$.  In Fig. 8, in connecting the picture cells which face two adjacent row electrodes, for example $X_1$ and $X_2$, the A-column electrodes $Y_{Aj}$ (j = 1, 2, ... J) connect the picture cells of the first row facing to the row electrode $X_1$ and the picture cells of the last (eighth) row facing to the row electrode $X_2$, and the B-column electrode $Y_{Bj}$ connect the picture cells of the second row facing to the row electrode $X_1$ and the picture cells of the next to the last row (seventh row) facing to the row electrode $X_2$, and the C-column electrodes $Y_{Cj}$ connect to picture cells of the third and sixth rows, and the D-column electrodes $Y_{Dj}$ connect the picture cells of the fourth and fifth rows.  In such a construction of the reverse quadruplex matrix system, it is not necessary to intersect the connections (row electrodes) of the picture cells in a three dimensional way or detour the connections.

In the present embodiment, the matrix display panel 7 has picture cells of 4I rows by J columns.

The terminals of the A-column electrodes $Y_{Aj}$ and the B-column electrodes $Y_{Bj}$ are arranged on one side of the substrate 9 of the matrix display panel 7 and connected to the A-column and B-column electrode driver 10 while the terminals of the C-column electrodes

$Y_{Cj}$ and the D-column electrodes $Y_{Dj}$ are arranged on the other side of the substrate 9 and connected to the C-column and D-column electrode driver 20. The A-column and B-column electrode driver 10 and the C-column and D-column electrode driver 20 comprise RAM's 101, 201, latch registers 102, 202, modulators 103, 203, address counters 104, 204 and gates 105, 205, respectively. Enable signals $EN_{AB}$ and $EN_{CD}$ from the timing control circuit 3 are applied to enable signal input terminals EN of the A-column and B-column electrode driver 10 and the C-column and D-column electrode driver 20, respectively, to write the video data to the RAM of one of the column electrode drivers. The other portions of Fig. 11 are identical to those shown in Figs. 6, 7 and 9.

Fig. 12 shows operational waveforms of the third embodiment of the present invention shown in Fig. 11. The display operation of the video data of the first to eighth rows of the scan line is now explained with reference to Fig. 12. The display operation for the ninth and subsequent rows of the scan line is the repetition of the display operation for the first to eighth rows.

The enable signal $EN_{AB}$ is "1" in the first, second, seventh and eighth row periods of the scan line and the enable signal $EN_{CD}$ is "1" in the third to sixth period of the scan line. The address signal $A_1$ from the timing control circuit 3 is "1" in the second, fourth, fifth and seventh row periods of the scan line.

In the first and second row periods of the scan line, since the enable signal $EN_{AB}$ is "1" and the enable signal $EN_{CD}$ is "0", the video data are written into the RAM 101 of the A/B-column electrode driver 10. In the first row period of the scan line, the address signal $A_1$ from the timing control circuit 3 is "0" and it is "1" in the second row period of the scan line. Accordingly, the video data of the first and second rows of the scan line are alternately arranged in the RAM 101 with the video data of the first raw being first.

In the third and fourth row periods of the scan line, the enable signal $EN_{AB}$ is "0" and the enable signal $EN_{CD}$ is "1". Thus, the video data are written into the RAM 201 of the C/D-column electrode driver 20. In the third row period of the scan line, the address signal $A_1$ is "0" and in the fourth row period of the scan line the address signal $A_1$ is "1". Accordingly, the video data of the third and fourth rows of the scan data are arranged in the RAM 201 with the video data of the third row being first.

In the present embodiment, the strobe pulse STB is generated when the video data of the first to fourth rows of the scan line have been written into the RAM's 101 and 201 so that the video data are latched and the first row electrode $X_1$ is selected during the fifth to eighth row periods of the scan line. The video data are converted to the column electrode drive signals $V_{YAj}$, $V_{YBj}$, $V_{YCj}$ and $V_{YDj}$ by the modulators 103 and 203, and the column electrode drive signal $V_{YAj}$ corresponding to the video data of the first row of the scan line is applied to the A-column electrode $Y_{Aj}$, the column electrode drive signal $V_{YBj}$ corresponding to the video data of the second row of the scan line is applied to the B-column electrode $Y_{Bj}$, the column electrode drive signal $V_{YCj}$ corresponding to the video data of the third row of the scan line is applied to the C-column electrode $Y_{Cj}$ and the column electrode drive signal $V_{YDj}$ corresponding to the video data of the fourth row of the scan line is applied to the D-column electrode $Y_{Dj}$. Accordingly, in the matrix display panel 7 of Fig. 11, the video data are displayed by the picture cells of the first to fourth rows on the display columns $Y_j$.

In the fifth to eighth row periods of the scan line in which the first row electrode $X_1$ is selected and the video data are displayed by the picture cells of the first to fourth rows on the display columns $Y_j$, the next video data of the fifth to eight rows of the scan line are supplied to the column electrode drivers 10 and 20.

In the fifth and sixth row periods of the scan line, the enable signal $EN_{AB}$ is "0" and the enable signal $EN_{CD}$ is "1", and in the fifth row period of the scan line the address signal $A_1$ is "1" and in the sixth row of the scan line the address signal $A_1$ is "0".

Accordingly, the video data of the fifth and sixth rows of the scan line are written into the RAM 201 of the C/D-column electrode driver 20 with the video data of the sixth row being arranged first.

In the seventh and eighth row periods of the scan line, the enable signal $EN_{AB}$ is "1" and the enable signal $EN_{CD}$ is "0", and the address signal $A_1$ is "1" in the seventh row period of the scan line and "0" in the eighth row period of the scan line. Accordingly, the video data of the seventh and eighth rows of the scan line are written into the RAM 101 of the A/B-column electrode driver 10 with the video data of the eighth video data being arranged first.

The strobe pulse STB is generated when the video data of the fifth to eighth rows of the scan line have been written so that the video data are latched, and the second row electrode $X_2$ is selected in the ninth to twelfth row periods of the scan line. The video data are converted to the column electrode drive signals $V_{YAj}$, $V_{YBj}$, $V_{YCj}$ and $V_{YDj}$, and the column electrode drive signal $V_{YAj}$ corresponding to the video data of the eighth row of the scan line is applied to the A-column electrode $Y_{Aj}$, the column electrode drive signal $V_{YBj}$ corresponding to the video data of the seventh row of the scan line is applied to the B-column electrode $Y_{Bj}$, the column electrode drive signal $V_{YCj}$ corresponding to the video data of the sixth row of the scan line is applied to the C-column electrode $Y_{Cj}$

and the column electrode drive signal corresponding to the video data of the fifth rows of the scan line is applied to the D-column electrode $Y_{Dj}$. Accordingly, the video data of the fifth to eighth rows of the scan line are displayed by the picture cells of the fifth to eighth row on the display columns $Y_j$ in a correct sequence.

It should be readily understood that the display operations in the ninth and following row periods are the repetition of the above display operations.

In the third embodiment, it is apparent that the signal connecting lines for the column electrodes $Y_{Aj}$ - $Y_{Dj}$ and the column electrode drivers 10 and 20 do not intersect.

Embodiment 4

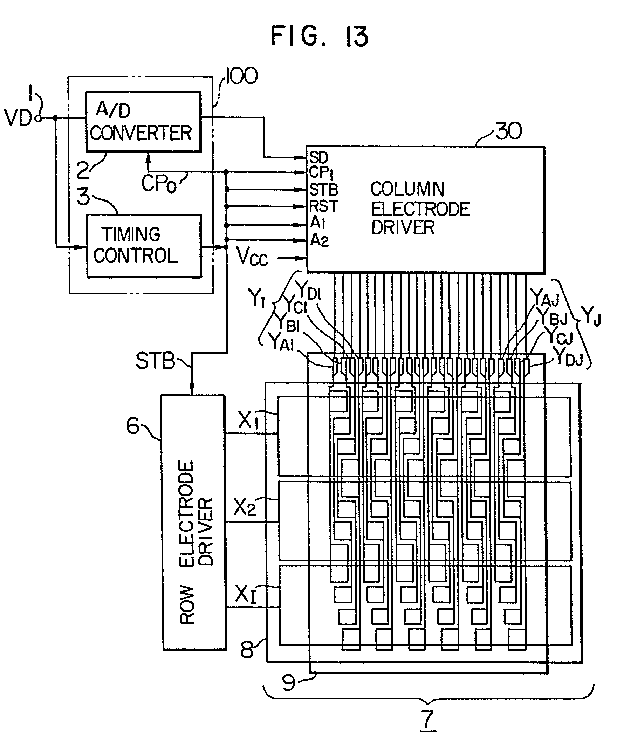

Fig. 13 shows a fourth embodiment of the present invention in which the like numerals to those shown in Figs. 3, 6, 9 and 11 denote the like or equivalent elements.

In the third embodiment shown in Figs. 11 and 12, the column electrodes are arranged on the opposite sides of the one substrate 9 of the matrix display panel 7. In the fourth embodiment shown in Fig. 13 which shows a reverse quadruplex matrix system, all of the column electrodes $Y_{Aj}$ - $Y_{Dj}$ are arranged on the same side of the one substrate 9.

In Fig. 13, column electrode drivers 30 and

30' drive 4J column electrodes $Y_{Aj}$, $Y_{Bj}$, $Y_{Cj}$ and $Y_{Dj}$.

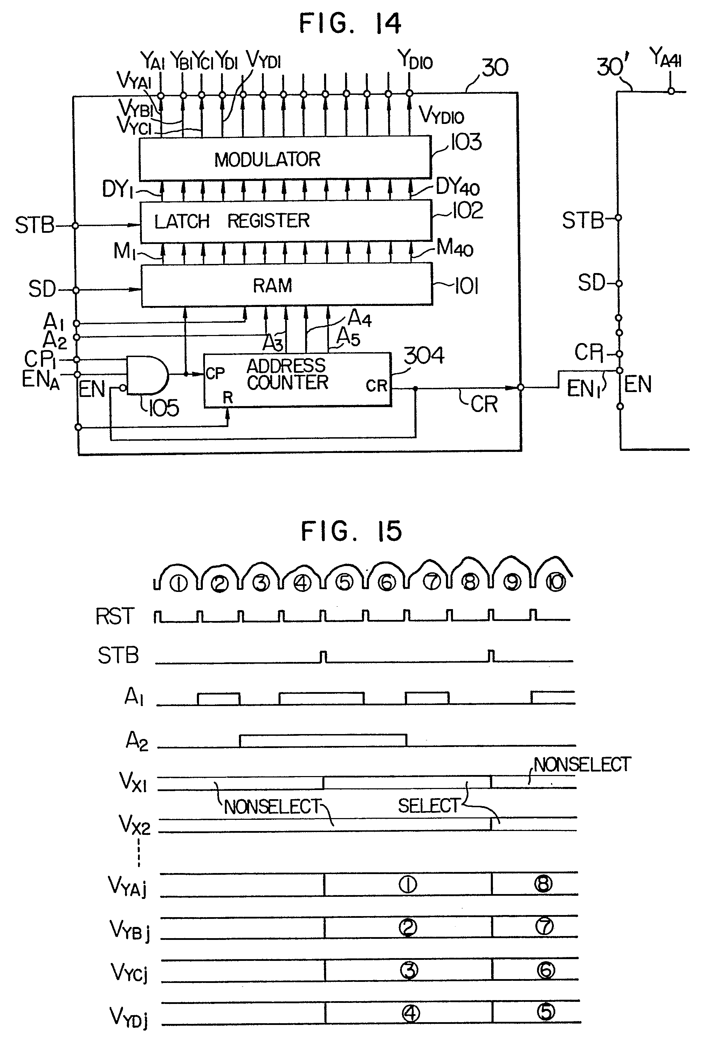

The column electrode driver 30 shown in Fig. 14 receives the address signals $A_1$ and $A_2$ which are the two low order bits of the address of the RAM 101 from the timing control circuit 3. An address counter 304 is a decimal counter and supplies the address signals $A_3$, $A_4$ and $A_5$ to the RAM 101.

Fig. 15 shows operational waveforms of the circuits of Figs. 13 and 14.

In Fig. 15, the address signal $A_1$ from the timing control circuit 3 is logical "1" in the second, fourth, fifth and seventh row periods of the scan line and the address signal $A_2$ from the timing control circuit is logical "1" in the third to sixth row periods of the scan line. In the ninth and following row periods, the operations are the repetition of the operations in the first to eighth row periods. The two low order bits of the address defined by the address signals $A_1$ and $A_2$ are (0, 0), (0, 1), (1, 0), (1, 1), (1, 1), (1, 0), (0, 1) and (0, 0) in the first to eighth row periods of the scan line, respectively.

The operations after the write operation to the RAM 101 are identical to those in the third embodiment.

In the present embodiment, it is seen that the signal connecting lines for the column electrodes $Y_{Aj}$ - $Y_{Dj}$ and the column electrode drivers 30 and 30' do not intersect.

While the duplex, reverse duplex and reverse quadruplex matrix systems have been shown in the preferred embodiments, the present invention is applicable to a multiplex matrix system, a reverse multiplex matrix system and a divided matrix system in which the row electrodes are also divided.

While the video signal VD is converted to the digital video signal SD by the A/D converter 2 in the illustrated embodiments, the signal SD may be a black-white binary signal in a character display device which does not need half tone.

While all of the scan lines of the video signal VD are displayed in the illustrated embodiments, one scan line may be omitted for display for every k-th scan line.

As described hereinabove, according to the present invention, the signal connecting lines for the column electrodes and the column electrode driver do not intersect and the outputs of the column electrode driver and the column electrodes may be simply connected in one-to-one correspondence. Accordingly, the connecting work for the matrix display device is facilitated.

WHAT IS CLAIMED IS:

1.     A matrix display device comprising:

a matrix display panel (7) having a display member between a plurality of row electrodes $(X_1 - X_I)$ and a plurality of column electrodes $(Y_{A1} - Y_{AJ},$ $Y_{B1} - Y_{BJ})$ to form a matrix of picture cells defined at intersections of said row electrodes and said column electrodes, the column electrodes for each column of the matrix picture cells being divided into a plurality of groups in a predetermined regularity and electrically connected within each group, terminals of the column electrodes of at least two of said column electrode groups being arranged on the same side of said matrix display panel;

a video data circuit (100) for supplying video data and a control signal for rendering a sequence of arrangement of said video data to coincide with the sequence of arrangement of said terminals of said column electrodes arranged on said same side of said matrix display panel;

a column electrode driver (10, 30) responsive to said control signal for rendering the sequence of arrangement of said video data to coincide with the sequence of arrangement of said terminals of said column electrodes arranged on said same side and applying column electrode drive signals to said column electrodes of said at least two groups in accordance with said video data; and

a row electrode driver (6) for applying row electrode drive signals to said row electrodes in accordance with said video data.

2.      A matrix display device according to Claim 1 wherein said column electrode driver includes a memory (101) addressed by said control signal and an address counter (104) for temporarily storing said video data at a specified address, a latch register (102) for latching the video data stored in said memory in parallel, and a modulator (103) for supplying the column electrode signals to be applied to said at least two groups in accordance with said video data.

3.      A matrix display device according to Claim 2 wherein said memory is a random access memory.

4.      A matrix display device according to Claim 1 wherein said display member is a liquid crystal.

5.      A matrix display memory according to Claim 1 wherein said matrix display panel defines n (n ≥ 2) rows of picture cells for each of said plurality of row electrodes and the picture cells on each column for the same row electrode belong to the column electrodes of n different groups.

6.      A matrix display device according to Claim 5 wherein the sequence of arrangement of the 2n rows by 1 column of picture cells of two adjacent row electrodes relative to the column electrodes of said n different groups is reversed for each row electrode.

# FIG.1

# FIG. 2

AMOUNT OF TRANSMITTED LIGHT

$V_{NS}$    $V_S$

APPLIED VOLTAGE $V_{rms}$

# FIG. 3

PRIOR ART

VD

2 A/D CONVERTER

100

SD    CP$_I$    EN$_A$    STB    CP$_I$    EN$_B$

STB

CP$_0$

4

41 LINE MEMORY

51 LINE MEMORY

42 LATCH REGISTER

52 LATCH REGISTER

43 MODULATOR

53 MODULATOR

3 TIMING CONTROL

5

$Y_I \{ Y_{BI} \atop Y_{AI}$

$Y_{AJ} \atop Y_{BJ} \} Y_J$

STB

6 LOW ELECTRODE DRIVER

$X_1$

$X_2$

$X_I$

8

9

7

FIG. 4

# FIG. 5

FIG. 6

FIG. 7

FIG. 8

VD

A₁

RST

STB

| Vx₁ | NONSELECT | SELECT | NONSELECT | |
|-----|-----------|--------|-----------|---|

| Vx₂ | NONSELECT | SELECT | NONSELECT |
|-----|-----------|--------|-----------|

| Vx₃ | NONSELECT | SELECT |
|-----|-----------|--------|

V_YAj    ①    ③    ⑤

V_YBj    ②    ④    ⑥

FIG. 9

6/9

FIG. 10

FIG. 12

FIG. 11

FIG. 13

FIG. 14

FIG. 15

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | US-A-4 233 602 (H.HANMURA)<br><br>*Figures 8-11; from column 5, line 30 to column 8, line 57* | 1,2,4-6 | G 09 G 3/36<br>H 04 N 3/12 |
| A | 1980 SID INTERNATIONAL SYMPOSIUM DIGEST OF TECHNICAL PAPERS, April 1980, pages 28-29, Coral Gables, Florida (USA); H.KAWAKAMI et al.: "Brightness uniformity in liquid crystal displays". *Pages 28-29* | 1,2,4-6 | |

TECHNICAL FIELDS
SEARCHED (Int. Cl. ³)

G 09 G 3/36
H 04 N 3/12
G 02 F 1/133

The present search report has been drawn up for all claims

| Place of search | Date of completion of the search | Examiner |
|---|---|---|
| THE HAGUE | 28-09-1982 | VAN ROOST L.L.A. |